(19) **Europäisches Patentamt / European Patent Office / Office européen des brevets**

(11) **EP 1 653 192 B1**

(12) **FASCICULE DE BREVET EUROPEEN**

(45) Date de publication et mention
de la délivrance du brevet:
**02.04.2008 Bulletin 2008/14**

(51) Int Cl.:
***G01B 11/06*** *(2006.01)*     ***G01J 5/00*** *(2006.01)*

(21) Numéro de dépôt: **05447208.9**

(22) Date de dépôt: **19.09.2005**

(54) **Procédé et appareil pour la mesure de l'épaisseur d'une couche d'oxyde**

Verfahren und System für Dickevermessung einer Oxidshicht

Method and apparatus for measuring the thickness of an oxide layer

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.10.2004 BE 200400524**

(43) Date de publication de la demande:
**03.05.2006 Bulletin 2006/18**

(73) Titulaire: **Centre De Recherches Metallurgiques 1200 Bruxelles (BE)**

(72) Inventeurs:
- **Franssen, Roger**
  **4850 Plombieres (BE)**
- **Schyns, Marc**
  **4690 Bassenge (BE)**
- **Bordignon, Michel**
  **4140 Sprimont (BE)**

(74) Mandataire: **pronovem et al**
**Office Van Malderen**
**Bld. de la Sauvenière 85/043**
**4000 Liège (BE)**

(56) Documents cités:
**EP-A- 0 408 015**     **EP-A- 1 593 929**
**US-A1- 2002 192 847**     **US-A1- 2003 176 000**

- **BOEBEL F G ET AL: "SIMULTANEOUS IN SITU MEASUREMENT OF FILM THICKNESS AND TEMPERATURE BY USING MULTIPLE WAVELENGTHS PYROMETRIC INTERFEROMETRY (MWPI)" IEEE TRANSACTIONS ON SEMICONDUCTOR MANUFACTURING, IEEE SERVICE CENTER, PISCATAWAY, NJ, US, vol. 6, no. 2, 1 mai 1993 (1993-05-01), pages 112-118, XP000369971 ISSN: 0894-6507**
- **PATENT ABSTRACTS OF JAPAN vol. 1998, no. 13, 30 novembre 1998 (1998-11-30) & JP 10 206125 A (NIPPON STEEL CORP), 7 août 1998 (1998-08-07)**

EP 1 653 192 B1

**Description**

**Objet de l'invention**

La présente invention se rapporte à un procédé amélioré pour la mesure de l'épaisseur, éventuellement simultanément avec celle de la température, d'une couche d'oxyde déposée sur un substrat en mouvement à grande vitesse, de préférence une bande métallique chaude destinée à un traitement de galvanisation au trempé à chaud.

L'invention se rapporte également à l'installation pour la mise en oeuvre du procédé amélioré.

Les améliorations de la présente demande doivent s'entendre par rapport aux caractéristiques du procédé et de l'installation décrits dans la demande de brevet belge BE 2004/0220, déposée le 03.05.2004 au nom du même demandeur et non encore publiée. Le vocabulaire et la terminologie de la présente demande doivent donc s'entendre dans le contexte de cette demande antérieure.

EP-A 0 408 015 décrit ensuite un réflectomètre (comprenant une source de lumière avec un spectre continu et un spectromètre) pour mesurer l'épaisseur d'une couche d'oxyde. L'épaisseur est déterminée avec une table comprenant une correlation entre l'épaisseur de la couche d'oxyde et la réflectance.

**Arriére-plan technologique et état de la technique**

Pour rappel, un objet de l'invention selon BE 2004/0220 se rapporte à un procédé pour la mesure sans contact, simultanée et en temps réel de l'épaisseur (e) et la température (T) d'une couche d'oxyde déposée sur un substrat métallique, de préférence une bande d'acier en mouvement destinée à un traitement ultérieur de galvanisation au trempé à chaud.

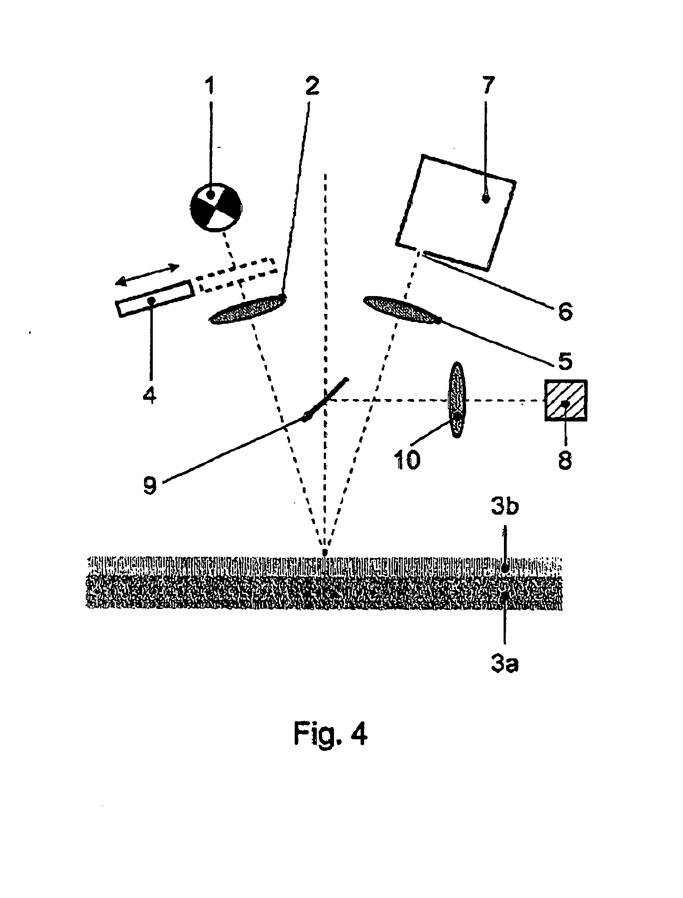

Ce procédé utilise une installation, notamment représentée sur la figure 4, comprenant une source de lumière 1 présentant un spectre essentiellement continu s'étendant au moins d'une longueur d'onde inférieure ($\lambda_1$) à une longueur d'onde supérieure ($\lambda_2$) et formant, par l'intermédiaire d'un premier moyen optique, de préférence une lentille 2, une petite tache lumineuse à la surface du substrat 3a revêtu d'une couche d'oxyde 3b, un obturateur 4 positionné entre la source de lumière 1 et le substrat 3a revêtu, un second moyen optique, de préférence une lentille 5, formant l'image de la surface de ladite tache sur la fente d'entrée 6 d'un spectromètre optique 7 dont la gamme de longueurs d'onde s'étend également au moins de la longueur d'onde inférieure ($\lambda_1$) à la longueur d'onde supérieure ($\lambda_2$).

Selon le procédé de l'invention antérieure, l'épaisseur (e) de ladite couche d'oxyde est déterminée à partir de l'analyse du spectre de facteur de réflexion R($\lambda$) et la température (T) est déterminée simultanément à partir de S1($\lambda$) et de l'épaisseur (e), où :

- R($\lambda$) est le spectre de l'intensité du rayonnement réfléchi sur le substrat revêtu S3($\lambda$) divisé par le spectre de l'intensité du rayonnement incident S0($\lambda$) de la source de lumière, où S3($\lambda$) est lui-même obtenu en soustrayant le spectre S1($\lambda$) du spectre S2($\lambda$) ;
- S1($\lambda$) est le spectre de l'intensité du rayonnement intrinsèque du substrat revêtu, mesuré dans une première étape au moyen dudit spectromètre, fonctionnant en l'occurrence en mode pyromètre, en fermant l'obturateur dans le chemin optique ;
- S2($\lambda$) est le spectre d'intensité du substrat revêtu mesuré dans une seconde étape au moyen dudit spectromètre, fonctionnant en l'occurrence en mode pyromètre et réflexion, en laissant ledit obturateur ouvert.

Toujours selon l'invention antérieure, on détermine l'épaisseur (e) de la couche d'oxyde à partir de l'analyse du spectre de facteur de réflexion R($\lambda$) de la manière suivante :

- si le spectre de facteur de réflexion R($\lambda$), dans la gamme opérationnelle précitée du spectromètre, c'est-à-dire ($\lambda_1$, $\lambda_2$), présente au moins un pic d'interférence détectable, que ce soit un maximum ou un minimum, l'épaisseur de la couche d'oxyde est déduite de la longueur d'onde de ces pics minima ($\lambda_{1m}$, $\lambda_{2m}$, ...) ou maxima ($\lambda_{1M}$, $\lambda_{2M}$, ...) à partir des propriétés optiques, de préférence l'indice de réfraction complexe, de la couche d'oxyde et du substrat, l'épaisseur de la couche d'oxyde étant comprise entre deux valeurs $e_1$ et $e_2$ ;
- si aucun pic n'est détectable dans la gamme spectrale précitée, on en déduit que la couche est soit trop mince, c'est-à-dire a une épaisseur $< e_1$, soit trop épaisse, c'est-à-dire a une épaisseur $> e_2$, pour avoir des pics d'interférence apparaissant dans l'intervalle spectral considéré, l'atténuation de l'illumination dans la couche étant telle, lorsque cette couche est trop épaisse, qu'aucune interférence significative ne se produit, et on procède à la discrimination entre les deux cas en se basant sur la forme et l'intensité du signal de facteur de réflexion ; de préférence, on compare l'intensité du signal de facteur de réflexion [R($\lambda_3$)], prise à une troisième longueur d'onde donnée ($\lambda_3$), égale à ou proche de la longueur d'onde supérieure ($\lambda_2$), à un niveau d'intensité de référence prédéterminé obtenu par calibration ($R_{ref}$) ; dans le cas où le signal de facteur de réflexion est plus petit que ce niveau prédéterminé [R

$(\lambda_3) < R_{ref}$], on constate alors qu'une couche d'oxyde très épaisse, c'est-à-dire d'épaisseur supérieure à la valeur maximale $e_2$, est formée ; dans le cas contraire, on constate qu'il s'agit d'une couche d'oxyde très mince, c'est-à-dire d'épaisseur inférieure à la valeur minimale $e_1$ ;

- toujours dans ce cas de figure où la couche d'oxyde est dite très épaisse ou très mince, le traitement complémentaire suivant est requis :

  - pour la couche très mince, la valeur de l'épaisseur de la couche d'oxyde est déterminée à partir de la forme, de préférence la pente, de la courbe du facteur de réflexion spectrale $R(\lambda)$ ;
  - pour la couche très épaisse, aucune valeur d'épaisseur n'est obtenue à partir des mesures du facteur de réflexion spectrale.

Le procédé décrit dans la demande de brevet BE 2004/0220 présente toutefois quelques inconvénients :

- lorsqu'aucun pic du facteur de réflexion $R(\lambda)$ n'est détectable dans l'intervalle spectral considéré $(\lambda_1, \lambda_2)$, la distinction entre couche très mince ($< e_1$) et très épaisse ($> e_2$) se fait donc en se basant sur la forme et l'intensité du signal de facteur de réflexion et préférentiellement en comparant $R(\lambda_3)$ à un niveau d'intensité de référence $R_{ref}$, prédéterminé obtenu par calibration. L'expérience montre cependant que la valeur $R_{ref}$ peut être influencée par certains paramètres tels que la rugosité du substrat, la nuance du substrat, etc. ;
- le calcul de l'épaisseur pour les couches très minces ($<e_1$) peut aussi être influencé par des paramètres tels que la nuance et la rugosité ;
- d'autre part, en cas de présence de pics dans le spectre, des difficultés peuvent parfois apparaître dans la détermination du facteur k décrivant l'ordre d'apparition des pics, entraînant une valeur erronée d'épaisseur calculée ;
- enfin, les essais industriels avec visée à longue distance (par exemple 1 mètre ou plus) ont montré que la détection de minima et maxima est parfois rendue difficile par suite de fluctuations locales du rayonnement propre de la bande, lorsque sa température est telle que, dans certaines plages de longueur d'onde, le rayonnement intrinsèque $S1(\lambda)$ est nettement plus élevé que le rayonnement réfléchi $S3(\lambda)$.

### Buts de l'invention

La présente invention vise à fournir une solution qui permette de s'affranchir des inconvénients de l'état de la technique, notamment ceux énoncés ci-dessus.
L'invention a en particulier pour but d'améliorer la précision de l'estimation de l'épaisseur du revêtement sur le substrat métallique.

### Principaux éléments caractéristiques de l'invention

L'invention se rapporte à des améliorations du procédé de la demande BE 2004/0220, qui prévoyait uniquement une estimation de l'épaisseur effectuée par une mesure du facteur de réflexion spectrale, telle que détaillée ci-dessus. Selon la présente invention, cette estimation d'épaisseur est également effectuée par analyse du rayonnement thermique de la bande, lorsque ce rayonnement est important, voire suffisant. La méthode de déduction de la température à partir du rayonnement thermique et de l'épaisseur reste inchangée par rapport à la demande BE 2004/0220.
Ainsi, un premier objet de l'invention est de proposer un procédé amélioré de détermination de l'épaisseur de la couche d'oxyde, selon les termes de la revendication 1. Plus précisément, ladite épaisseur est déterminée à partir de l'analyse du spectre du facteur de réflexion et à partir de la mesure de températures apparentes absolues du substrat revêtu à au moins deux longueurs d'onde, ladite mesure étant réalisée au moyen du spectromètre fonctionnant en mode pyromètre et éventuellement d'un pyromètre ou détecteur supplémentaire extérieur au spectromètre.
Des modalités préférées du procédé de l'invention sont détaillées dans les revendications 2 à 15.
Un deuxième objet de l'invention est de proposer une installation modifiée selon les termes de la revendication 16.
Des formes d'exécution préférées de l'installation sont également détaillées dans les revendications 17 à 24.

### Brève description des figures

La figure 1 représente graphiquement l'évolution théorique simulée du paramètre DITA, défini ci-après, en fonction de l'épaisseur du revêtement, dans le cas d'un dépôt FeO sur Fe, correspondant à une lecture sur des pyromètres monochromatiques travaillant respectivement à 1600 et 900 nm, la gamme d'épaisseur univoque délimitée par $e_{min}$ et $e_{max}$, ainsi qu'un seuil L sur l'échelle DITA servant à discriminer les couches très minces des couches très épaisses.
La figure 2 représente graphiquement l'évolution théorique simulée du paramètre DITA, en fonction de l'épaisseur du revêtement mais avec des pyromètres monochromatiques à 3900 et 900 nm respectivement.

La figure 3 correspond à la figure 2 mais avec des pyromètres monochromatiques à 1000 et 800 nm respectivement.

La figure 4, déjà mentionnée, représente schématiquement un exemple d'appareil de mesure prévu pour la mise en oeuvre du procédé de l'invention.

### Description d'une forme d'exécution préférée de l'invention

#### *BASE THEORIQUE DES AMELIORATIONS*

##### Définitions

On appelle température apparente $T_A$ d'un pyromètre, l'indication donnée par ce pyromètre lorsqu'il vise une cible ayant une température réelle de surface $T_C$ et une émissivité $\varepsilon_c$, le réglage de correction de l'émissivité du pyromètre étant ajusté à la valeur $\varepsilon_p$.

Lorsque $\varepsilon_p = \varepsilon_c$, on a : $T_A = T_C$.

Lorsque les températures sont exprimées sous forme de températures absolues, on utilise dans ce contexte les notations $T_{Aa}$ et $T_{Ca}$.

##### Base théorique

De la loi de Wien, applicable lorsque $\lambda * T_{Ca}$ est beaucoup plus petit que c2 (valant 14388 lorsque la longueur d'onde est exprimée en $\mu$m et la température en Kelvin), on peut déduire aisément que :

$$1/T_{Aa} = 1/T_{Ca} - (\lambda/c2)*\ln(\varepsilon_c/\varepsilon_p) \quad (1).$$

Si on effectue maintenant des mesures à deux longueurs d'onde différentes ($\lambda_1$, $\lambda_2$), on peut écrire:

$$1/T_{Aa2} - 1/T_{Aa1} = (\lambda_1/c2)*\ln(\varepsilon_{c1}/\varepsilon_{p1}) - (\lambda_2/c2)*\ln(\varepsilon_{c2}/\varepsilon_{p2}) \quad (2).$$

La relation (2) montre que, théoriquement, lorsqu'on utilise des pyromètres monochromatiques ou à spectre très étroit, la différence des inverses des températures apparentes absolues, en abrégé DITA, dépend donc uniquement des émissivités de la cible aux deux longueurs d'onde choisies et du réglage d'émissivité choisi pour ces deux longueurs d'onde. Elle est donc indépendante de la température réelle de la cible. Le lecteur remarquera encore que la notation des longueurs d'onde dans cette section ne désigne pas les valeurs limites de l'intervalle spectral comme dans la section ci-dessus et dans la demande de brevet antérieure, mais deux longueurs d'onde arbitrairement choisies.

Dans le présent contexte, pour éviter toute confusion, on définira donc :

$$DITA = 1/T_{Aa2} - 1/T_{Aa1} \quad (3)$$

avec $\lambda_2 > \lambda_1$.

Cependant, le principe général à la base de la présente invention est inchangé si on inverse le rôle de $\lambda_1$ et $\lambda_2$. Dans la suite de l'exposé, on raisonnera sur base de l'expression (3).

#### *BASE EXPERIMENTALE*

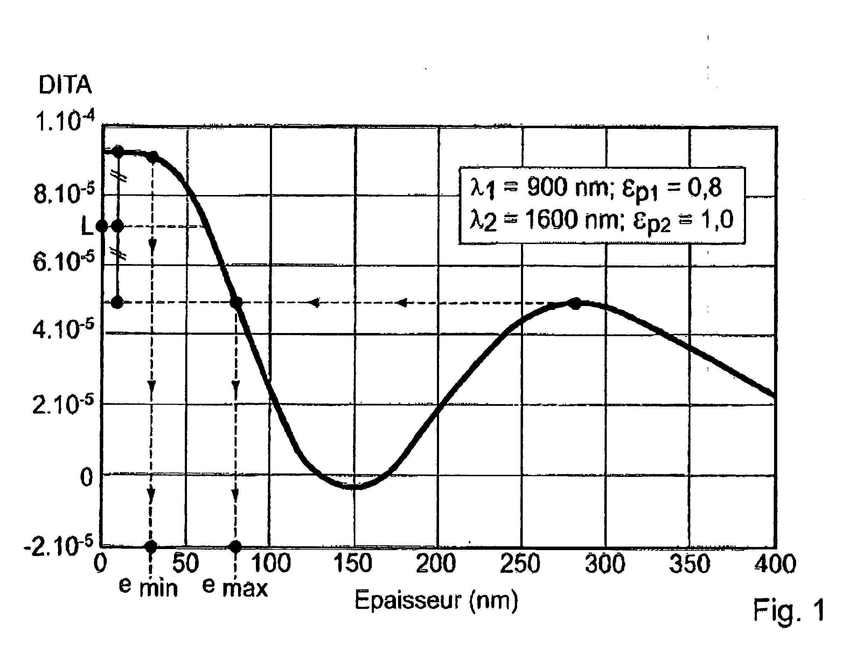

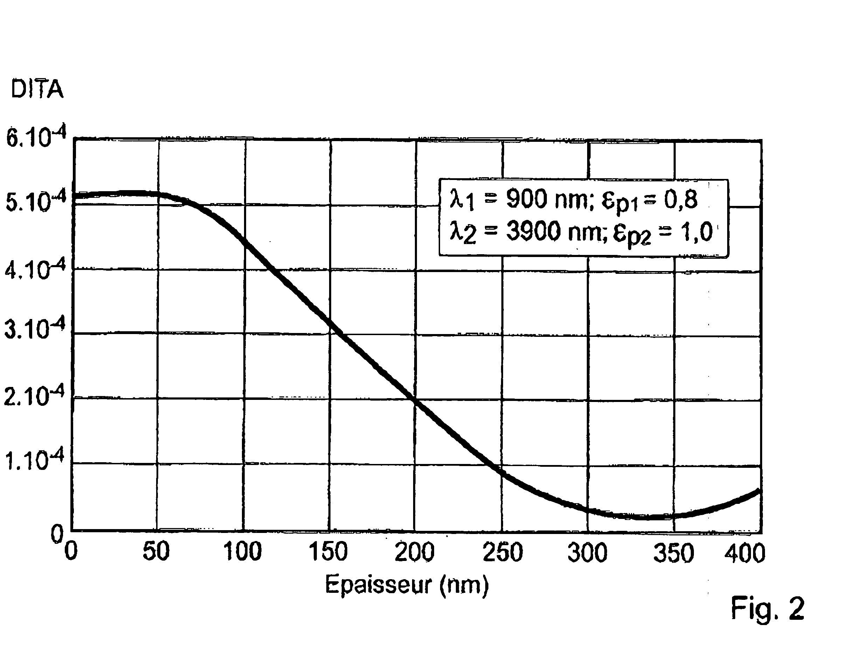

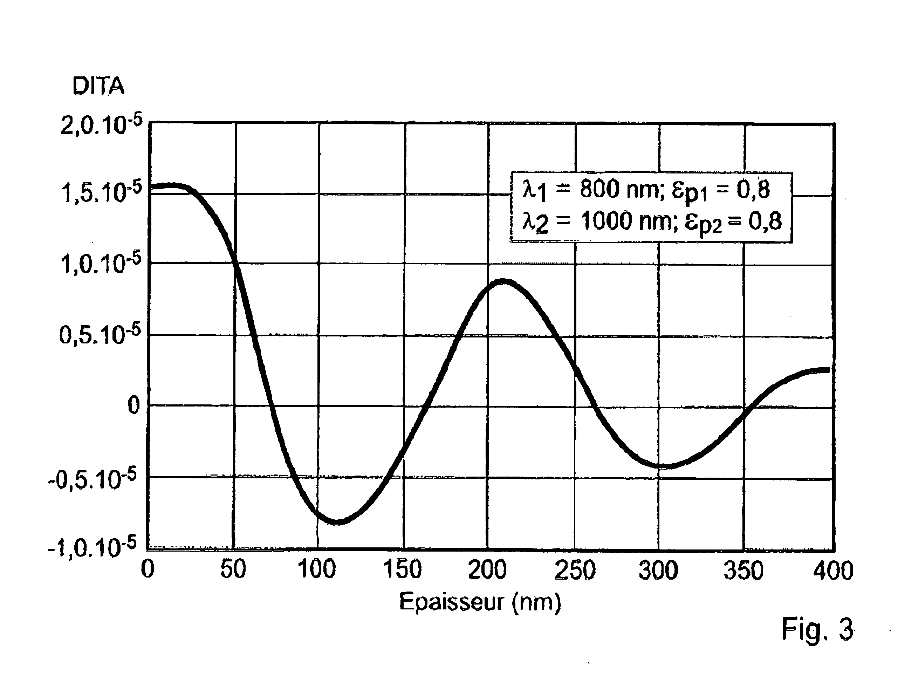

Les simulations théoriques, représentées sur les figures 1 à 3, ont été confirmées par des résultats expérimentaux. Ceux-ci montrent donc que, dans une certaine gamme d'épaisseur, dépendant des deux longueurs d'onde arbitrairement choisies pour le procédé, l'épaisseur peut être estimée à partir de la différence des inverses des températures apparentes (DITA), ce qui est une méthode particulièrement simple. Si on sort de cette gamme d'épaisseur particulière, la relation n'est plus univoque. Le choix des longueurs d'onde des pyromètres est donc très important. Ainsi, la figure 1 montre que si on prend les pyromètres à 900 et à 1600 nm, le paramètre DITA donne univoquement une épaisseur de revêtement par exemple comprise entre $e_{min}$ = 30 et $e_{max}$ = 80 nm environ. Si le processus de formation de la couche est tel que que l'épaisseur ne dépasse jamais 150 nm, la plage utile peut alors s'étendre jusqu'à environ $e_{max}$ = 150 nm. Pour des longueurs d'onde de pyromètres à 900 et 3900 nm, l'épaisseur peut être déterminée entre $e_{min}$ = 50 nm et respectivement $e_{max}$ = 240 ou 300 nm (épaisseur a priori inférieure à 320 nm) environ (voir figure 2). Enfin, pour des pyromètres réglés sur 800 et 1000 nm, on constate une oscillation marquée du paramètre DITA qui impose de choisir une plage plus restreinte d'épaisseurs mesurables, par exemple entre $e_{min}$ = 20 nm et respectivement $e_{max}$ = 55 ou 100 nm (épaisseur a priori inférieure à 110 nm).

Les améliorations proposées pour le procédé consistent alors en un traitement différent du signal suivant l'importance du rayonnement propre de la bande :

1. Si le rayonnement thermique de la bande $S1(\lambda)$ n'est pas détectable ou est négligeable par rapport au signal réfléchi $S3(\lambda)$ pour l'ensemble de la gamme spectrale considérée du spectromètre, la méthode dite DITA n'est pas applicable et on utilise la méthode de calcul de l'épaisseur telle que décrite dans la demande BE 2004/0220 (voir ci-dessus).

2. Si le rayonnement thermique $S1(\lambda)$ est détectable et ne dépasse pas le niveau du signal réfléchi $S3(\lambda)$ multiplié par un facteur K (K>0) déterminé expérimentalement pour l'entièreté de la gamme spectrale du spectromètre, l'expérience montre que la méthode de la détection de minima et maxima d'interférence est plus précise que la méthode DITA. La valeur de K peut être inférieure ou supérieure à 1 et est fortement dépendante de la configuration géométrique ou optique retenue. On utilise alors la méthode de la détection des minima et maxima d'interférences avec les modifications suivantes :

- *Distinction entre couches très minces et très épaisses (pas de pic)*
  La distinction entre couche très mince(< e1) et très épaisse (> e2) peut se faire en mesurant les températures apparentes absolues à ces deux longueurs d'onde ($\lambda_1$, $\lambda_2$), après étalonnage préalable devant corps noir, en calculant ensuite la différence des inverses de ces températures absolues et en comparant le résultat obtenu à un seuil L. Ce seuil est par exemple fixé à une valeur égale à environ la moyenne arithmétique de la valeur DITA obtenue pour une couche d'épaisseur égale à ou proche de 0 nm et à la valeur du paramètre DITA atteinte au deuxième maximum de la courbe (voir figure 1). Lorsque la valeur DITA est supérieure au seuil L, la couche est considérée comme très mince. Sinon, elle est considérée comme très épaisse. La longueur d'onde inférieure sera choisie aussi courte que possible, mais suffisamment élevée que pour assurer un rapport signal/bruit convenant à la mesure de la température apparente (par exemple dans la gamme 700 à 1000 nm). Pour la longueur d'onde supérieure, plusieurs options existent :

  - prendre une longueur d'onde aussi élevée que possible dans la gamme spectrale du spectromètre (par exemple 1600 nm) ;
  - choisir une longueur d'onde en dehors de la gamme du spectromètre, en utilisant

    - soit un pyromètre extérieur au dispositif visant la même zone ou une zone très proche sur la bande ;
    - soit utiliser un dispositif combinant le spectromètre et un détecteur supplémentaire sensible à la dite longueur d'onde (voir appareil sur la figure 4).

- *Calcul de l'épaisseur pour des couches très minces (pas de pic ; épaisseur < e1)*
  Les températures apparentes à deux longueurs d'onde seront calculées à partir des mesures du spectromètre. La longueur d'onde inférieure sera choisie aussi courte que possible, mais suffisamment élevée que pour assurer un rapport signal/bruit convenant à la mesure de la température apparente à cette longueur d'onde. La longueur d'onde supérieure devra être judicieusement choisie pour couvrir une plage d'épaisseur s'étendant au moins jusqu'à e1. On peut, par exemple choisir la longueur d'onde inférieure $\lambda_1$ dans une gamme allant de 700 à 900 nm et la longueur d'onde supérieure $\lambda_2$ dans une gamme allant de $\lambda_1$ + 100 nm à $\lambda_1$ + 300 nm. On calcule DITA et on en déduit l'épaisseur.

- *Calcul de l'épaisseur pour des couches très épaisses (pas de pic ; épaisseur > e2)*
  Les températures apparentes à deux longueurs d'onde seront calculées à partir des mesures du spectromètre. La longueur d'onde inférieure sera choisie par exemple aussi courte que possible, mais suffisamment élevée que pour assurer un rapport signal/bruit convenant à la mesure de la température apparente à cette longueur d'onde. La longueur d'onde supérieure sera supérieure ou égale à au moins 5 fois et de préférence 15 fois l'épaisseur maximale à mesurer. On calcule DITA et on en déduit l'épaisseur.

- *Discrimination de l'ordre des pics*
  Le calcul du paramètre DITA, obtenu à partir de la mesure de températures apparentes absolues à deux longueurs d'onde judicieusement choisies pour couvrir la plage entre $e_1$ et $e_2$, permet de lever des incertitudes pouvant apparaître dans la détermination de l'ordre des pics. La longueur d'onde supérieure $\lambda_2$ sera supérieure ou égale à au moins 5 fois et de préférence 15 fois l'épaisseur maximale à mesurer. La longueur d'onde $\lambda_2$ est choisie pour toujours permettre une détermination univoque jusqu'à la plus petite des deux valeurs constituées par $e_2$ et la valeur maximale de l'épaisseur à mesurer (suivant courbes).

3. Si le rayonnement thermique $S1(\lambda)$ est détectable et dépasse le niveau du signal réfléchi $S3(\lambda)$ multiplié par le facteur K (K>0), défini ci-dessus et déterminé expérimentalement, dans au moins une plage de la gamme spectrale du spectromètre, l'épaisseur sera calculée directement à partir du paramètre DITA tel que décrit. La longueur d'onde inférieure $\lambda_1$ sera aussi courte que possible, mais suffisamment élevée que pour assurer un rapport signal/bruit convenant à la mesure de la température apparente à cette longueur d'onde, tandis que la longueur d'onde supérieure $\lambda_2$ sera supérieure ou égale à au moins 5 fois et idéalement 15 fois l'épaisseur maximale à détecter. Pour ce choix de longueurs d'ondes, il existe une limite inférieure sous laquelle la mesure n'est plus précise. Dans ce cas, on peut choisir un deuxième couple de longueurs d'onde $(\lambda_3, \lambda_4)$ plus courtes (par exemple 1000 et 800 nm), permettant d'étendre la gamme vers les faibles épaisseurs. Le deuxième couple de longueurs d'ondes pourra être choisi avantageusement en utilisant les relations $\lambda3 \leq \lambda1$ ; $\lambda4 > \lambda1$ et $\lambda4 - \lambda3 \leq 300$ nm.

Appareil de mesure

On pourra utiliser l'installation de la demande de brevet BE 2004/0220, auquel on adjoint un pyromètre à grande longueur d'onde et à spectre étroit, par exemple un pyromètre à 3,9 $\mu$m utilisé pour la mesure au travers de flammes.
On peut aussi utiliser un appareil de mesure tel que représenté sur la figure 4, utilisant un détecteur supplémentaire 8 sensible à une longueur d'onde en dehors de la gamme du spectromètre 7, le rayonnement du substrat revêtu étant dirigé vers ce détecteur via un miroir 9 et une lentille 10. Afin de simplifier ou rendre plus compact le dispositif, on pourrait utiliser tout dispositif permettant de séparer le rayonnement dans la gamme spectrale du spectromètre par rapport au rayonnement dans la gamme spectrale du détecteur supplémentaire, par exemple au moyen d'un miroir dichroïque. On pourrait également utiliser tout dispositif permettant d'envoyer alternativement le rayonnement intrinsèque du produit vers le spectromètre puis vers le détecteur supplémentaire en utilisant des moyens tels que modulateurs optiques, miroirs mobiles, etc.

**Revendications**

**1.** Procédé pour la mesure sans contact et en temps réel de l'épaisseur (e) d'une couche d'oxyde déposée sur un substrat métallique, de préférence une bande d'acier en mouvement destinée à un traitement ultérieur de galvanisation au trempé à chaud, utilisant une installation comprenant une source de lumière (1) présentant un spectre essentiellement continu et formant, par l'intermédiaire d'un premier moyen optique (2), de préférence une lentille, une petite tache lumineuse à la surface (3) du substrat, un obturateur (4) positionné entre la source de lumière et le substrat, un second moyen optique (5), de préférence une lentille, formant l'image de la surface de ladite tache sur la fente d'entrée (6) d'un spectromètre optique (7) sensible dans une gamme de longueurs d'onde comprise à l'intérieur du spectre de la source de lumière, et un pyromètre ou un détecteur supplémentaire (8) extérieur au spectromètre (7), vers lequel est dirigé le rayonnement intrinsèque du substrat revêtu et sensible à au moins une longueur d'onde située en dehors de la gamme spectrale du spectromètre, **caractérisé en ce que** l'épaisseur (e) de ladite couche d'oxyde est déterminée à partir de la mesure de températures apparentes absolues du substrat revêtu à au moins deux longueurs d'onde, lesdites mesures étant réalisées au moyen du spectromètre (7) fonctionnant en mode pyromètre et du pyromètre ou détecteur supplémentaire (8), dans le cas où le rayonnement intrinsèque $S1(\lambda)$ du substrat revêtu est détectable sans dépasser K fois (K>0) la valeur du signal réfléchi $S3(\lambda)$ sur l'ensemble de la gamme spectrale du spectromètre (7), où :

- $S1(\lambda)$ est le spectre de l'intensité du rayonnement intrinsèque du substrat revêtu, mesuré dans une première étape au moyen dudit spectromètre (7), fonctionnant en l'occurrence en mode pyromètre, en fermant l'obturateur (4) dans le chemin optique ;
- $S2(\lambda)$ est le spectre d'intensité du substrat revêtu mesuré dans une seconde étape au moyen dudit spectromètre (7), fonctionnant en l'occurrence en mode pyromètre et réflexion, en laissant ledit obturateur (4) ouvert ;
- $S3(\lambda)$ est lui-même obtenu en soustrayant le spectre $S1(\lambda)$ du spectre $S2(\lambda)$.

**2.** Procédé selon la revendication 1, **caractérisé en ce que** l'on détermine l'épaisseur (e) de la couche d'oxyde, si aucun pic n'est détectable dans l'intervalle spectral précité, en déduisant que la couche est soit trop mince, c'est-à-dire a une épaisseur < $e_1$, soit trop épaisse, c'est-à-dire a une épaisseur > $e_2$, pour avoir des pics d'interférence apparaissant dans l'intervalle spectral considéré, l'atténuation de l'illumination dans la couche étant telle, lorsque cette couche est trop épaisse, qu'aucune interférence significative ne se produit, et en procèdant à la discrimination entre les deux cas en se basant sur la mesure des températures apparentes absolues ($T_{Aa1}$, $T_{Aa2}$) à deux longueurs d'onde choisies dans la gamme spectrale du spectromètre (7) et du pyromètre ou détecteur supplémentaire (8), une longueur d'onde inférieure ($\lambda_1$) et une longueur d'onde supérieure ($\lambda_2$), à savoir en calculant la différence des inverses desdites températures ($1/T_{Aa2}$ - $1/T_{Aa1}$), appelée paramètre DITA, et en comparant cette différence à un seuil prédéterminé (L), cette comparaison permettant de déterminer si la couche est très épaisse ou très mince, à savoir qu'elle est considérée comme très mince si la valeur de DITA est supérieure audit seuil (L), et comme très épaisse sinon.

3. Procédé selon la revendication 2, **caractérise en ce que** la valeur dudit seuil (L) est approximativement égale à la moyenne arithmétique de la valeur DITA obtenue pour une couche d'épaisseur proche ou égale à 0 et à la valeur DITA du deuxième maximum de la courbe DITA en fonction de l'épaisseur.

4. Procédé selon la revendication 1, **caractérisé en ce que**, si le spectre du facteur de réflexion R($\lambda$), R($\lambda$) étant défini comme le spectre de l'intensité du rayonnement réfléchi sur le substrat revêtu S3($\lambda$) divisé par le spectre de l'intensité du rayonnement incident S0($\lambda$) de la source de lumière, dans la gamme opérationnelle du spectromètre présente au moins un pic détectable, on calcule l'épaisseur (e) de la couche d'oxyde par la formule suivante :

$$e = k.\lambda_e/4n,$$

où k est l'ordre d'apparition des pics dans le cas d'une croissance progressive de la couche d'oxyde (k=1 : $1^{er}$ minimum, k=2 : 1eK maximum ; k=3 : $2^{ème}$ minimum, etc.), $\lambda_e$ est la longueur d'onde du pic considéré et n est l'indice de réfraction, le calcul du paramètre DITA obtenu à partir de la mesure des températures apparentes absolues ($T_{Aa1}$, $T_{Aa2}$) aux deux dites longueurs d'onde choisies ($\lambda_1$, $\lambda_2$) étant utilisé le cas échéant pour une détermination univoque de l'ordre d'apparition des pics et donc de la valeur de k affectée à chacun des pics.

5. Procédé selon la revendication 4, **caractérisé en ce que**, lorsqu'il y a plusieurs extrema, l'épaisseur (e) est le résultat du calcul de la moyenne arithmétique des épaisseurs obtenues par l'expression précitée.

6. Procédé selon l'une quelconque des revendications 2 à 5, **caractérisé en ce que** la longueur d'onde inférieure ($\lambda_1$) est choisie aussi courte que possible pour autant que le rapport signal/bruit soit supérieur ou égal à 1.

7. Procédé selon la revendication 6 **caractérisé en ce que** la longueur d'onde inférieure ($\lambda_1$) est supérieure ou égale à 700 nm.

8. Procédé selon l'une quelconque des revendications 2 à 7, **caractérisé en ce que** la longueur d'onde supérieure ($\lambda_2$) est choisie soit la plus élevée possible dans la gamme spectrale du spectromètre, soit à une valeur supérieure à la borne supérieure de la gamme spectrale du spectromètre, la mesure étant réalisée dans ce dernier cas au moyen du pyromètre ou du détecteur supplémentaire (8) extérieur au spectromètre et visant une zone essentiellement proche de celle visée par ce dernier.

9. Procédé selon la revendication 8, **caractérisé en ce que** la longueur d'onde supérieure ($\lambda_2$) est supérieure ou égale à au moins 5 fois et de préférence 15 fois l'épaisseur maximale à mesurer.

10. Procédé selon la revendication 2, **caractérisé en ce que**, dans le cas de la détermination d'une couche très mince, c'est-à-dire d'épaisseur inférieure à e1, la longueur d'onde inférieure ($\lambda_1$) est choisie aussi courte que possible tout en assurant un rapport signal/bruit supérieur ou égal à 1, la longueur d'onde supérieure ($\lambda_2$) étant choisie pour assurer une relation univoque entre le paramètre DITA et l'épaisseur en dessous de la valeur e1.

11. Procédé selon la revendication 2, **caractérisé en ce que**, dans le cas de la détermination d'une couche très épaisse, c'est-à-dire d'épaisseur supérieure à e2, la longueur d'onde supérieure ($\lambda_2$) étant choisie supérieure ou égale à au moins 5 fois, et de préférence 15 fois, l'épaisseur maximale à mesurer, la longueur d'onde inférieure ($\lambda_1$) étant ensuite choisie pour assurer une relation univoque entre le paramètre DITA et l'épaisseur dans la gamme s'étendant d'au moins e2 à l'épaisseur maximale à mesurer.

**12.** Procédé selon la revendication 1, **caractérisé en ce**, dans le cas où le rayonnement intrinsèque S1($\lambda$) du substrat revêtu est détectable et dépasse cette fois en intensité la valeur du signal réfléchi S3($\lambda$) multipliée par un facteur K (K>0) déterminé expérimentalement sur au moins une plage de la gamme spectrale du spectromètre, l'on détermine l'épaisseur (e) de la couche d'oxyde à partir du paramètre DITA, la longueur d'onde inférieure ($\lambda_1$) étant aussi courte que possible dans la gamme spectrale du spectromètre, tout en assurant un rapport signal/bruit supérieur ou égal à 1, et la longueur d'onde supérieure ($\lambda_2$) étant choisie supérieure où égale à au moins 5 fois, de préférence 15 fois, la valeur maximale de l'épaisseur à mesurer.

**13.** Procédé selon la revendication 12, **caractérisé en ce que** l'on mesure le paramètre DITA à deux couples de longueurs d'onde différents ($\lambda_1,\lambda_2$) et ($\lambda_3,\lambda_4$), de préférence en choisissant $\lambda_3 \leq \lambda_1$, $\lambda_4 > \lambda_1$ et $\lambda_4 \leq \lambda_3$ + 300 nm.

**14.** Procédé selon l'une quelconque des revendications 2 à 13, **caractérisé en ce que** l'épaisseur de la couche d'oxyde déterminée à partir du paramètre DITA est obtenue directement en reportant la valeur dudit paramètre sur une courbe de simulation théorique ou encore sur une courbe de calibration expérimentale acquise au préalable, montrant l'évolution dudit paramètre avec l'épaisseur de revêtement.

**15.** Procédé selon l'une quelconque des revendications précédentes, **caractérisé en ce que** le substrat métallique est une bande d'acier en mouvement subissant une oxydation contrôlée, de préférence dans un four de chauffe, suivie d'une réduction de la couche d'oxyde formée.

**16.** Installation pour la mise en oeuvre du procédé selon l'une quelconque des revendications précédentes, **caractérisé en ce qu'**elle comprend une source de lumière (1) présentant un spectre essentiellement continu et qui peut former, par l'intermédiaire d'une lentille (2), une petite tache lumineuse à la surface du substrat revêtu (3a, 3b), un obturateur (4) positionné entre la source de lumière et le substrat, une seconde lentille (5) formant l'image de la surface de ladite tache sur la fente d'entrée (6) d'un spectromètre optique (7) sensible dans une gamme de longueurs d'onde comprise à l'intérieur du spectre de la source de lumière, et un pyromètre ou un détecteur supplémentaire (8) extérieur au spectromètre (7), vers lequel peut être dirigé le rayonnement intrinsèque du substrat revêtu et sensible à au moins une longueur d'onde située en dehors de la gamme de longueur d'onde du spectromètre (7).

**17.** Installation selon la revendication 16, **caractérisée en ce que** le pyromètre extérieur (8) est un pyromètre à spectre étroit et sensible à une longueur d'onde supérieure ou égale à 5 fois et de préférence 15 fois l'épaisseur maximale de la couche à mesurer.

**18.** Installation selon la revendication 17, **caractérisée en ce qu'**elle comporte des moyens (9,10) pour séparer le rayonnement dans la gamme spectrale du spectromètre optique (7) de celui dans la gamme spectrale du pyromètre ou détecteur supplémentaire (8).

**19.** Installation selon la revendication 18, **caractérisée en ce que** lesdits moyens comprennent au moins un miroir dichroïque (9) et une lentille (10).

**20.** Installation selon la revendication 18, **caractérisée en ce qu'**elle comporte des moyens permettant d'envoyer alternativement le rayonnement intrinsèque du substrat revêtu vers le spectromètre optique (7) et vers le pyromètre ou détecteur supplémentaire (8), tels qu'un modulateur optique ou un miroir mobile.

**21.** Installation selon l'une quelconque des revendications 16 à 20, **caractérisée en ce qu'**elle est conformée pour qu'une seule lentille puisse être utilisée tant pour l'éclairage que pour la mesure et soit placée le long d'un axe sensiblement orthogonal à la surface du substrat.

**22.** Installation selon l'une quelconque des revendications 16 à 21, **caractérisé en ce que** la gamme opérationnelle de longueurs d'onde du spectromètre est comprise dans l'intervalle de 200 à 2500 nm.

**23.** Installation selon l'une quelconque des revendications 16 à 22, **caractérisée en ce que** le spectromètre est utilisable comme appareil de mesure du facteur de réflexion spectral dans la gamme de longueurs d'onde précitée.

**24.** Installation selon l'une quelconque des revendications 16 à 23, **caractérisée en ce qu'**elle peut être disposée à au moins 1 mètre de la surface du substrat.

**Claims**

1. Method for the contactless and real-time measurement of the thickness (e) of an oxide layer deposited on a metal substrate, preferably a steel strip in motion intended for subsequent hot dip galvanisation treatment, using an installation comprising a light source (1) with an essentially continuous spectrum and forming, by means of a first optical means (2), preferably a lens, a small luminous spot at the surface (3) of the substrate, a shutter (4) positioned between the light source and the substrate, a second optical means (5), preferably a lens, forming the image of the surface of said spot on the inlet slot (6) of an optical spectrometer (7) which is sensitive to a range of wavelengths comprised within the spectrum of the light source, and an additional pyrometer or detector (8) external to the spectrometer (7) towards which is directed the intrinsic radiation of the substrate that is coated and sensitive to at least one wavelength outside the spectral range of the spectrometer, **characterised in that** the thickness (e) of said oxide layer is determined from the measurement of the absolute apparent temperatures of the coated substrate at at least two wavelengths, said measurements being taken by means of the spectrometer (7) operating in pyrometer mode and by means of the additional pyrometer or detector (8), in the event that the intrinsic radiation $S1(\lambda)$ of the coated substrate is detectable without exceeding K times (K>0) the value of the reflected signal $S3(\lambda)$ over the entire spectral range of the spectrometer (7) where:

   - $S1(\lambda)$ is the intensity spectrum of the intrinsic radiation of the coated substrate, measured in a first stage by means of said spectrometer (7), operating in this case in pyrometer mode, by closing the shutter (4) in the optical track;
   - $S2(\lambda)$ is the intensity spectrum of the coated substrate measured in a second stage by means of said spectrometer (7), operating in this case in pyrometer and reflection mode, by leaving said shutter (4) open;
   - $S3(\lambda)$ itself is obtained by subtracting spectrum $S1(\lambda)$ from spectrum $S2(\lambda)$.

2. Method according to Claim 1, **characterised in that**, if no peak is detectable in the above-mentioned spectral interval, the thickness (e) of the oxide layer is determined by deducing that the layer is either too thin, i.e. it has a thickness $< e_1$, or too thick, i.e. it has a thickness $> e_2$, to have interference peaks appearing in the spectral interval considered, the attenuation of the illumination in the layer being such that, if this layer is too thick, no significant interference occurs, and by discriminating between both cases on the basis of the measurements of the absolute apparent temperatures ($T_{Aa1}$, $T_{Aa2}$) at two wavelengths selected in the spectral range of the spectrometer (7) and of the additional pyrometer or detector (8), a lower wavelength ($\lambda_1$) and an upper wavelength ($\lambda_2$), specifically by calculating the difference of the inverses of said temperatures ($1/T_{Aa2}$ - $1/T_{Aa1}$), called the DIAT parameter, and by comparing this difference with a predetermined threshold (L), this comparison allowing to determine whether the layer is very thick or very thin, i.e. very thin if the DIAT value is higher than said threshold (L) or otherwise, very thick.

3. Method according to Claim 2, **characterised in that** the value of said threshold (L) is approximately equal to the arithmetic mean of the DIAT value obtained for a layer with a thickness close or equal to 0 and to the DIAT value of the second maximum of the DIAT curve depending on the thickness.

4. Method according to Claim 1, **characterised in that**, if the reflection factor spectrum $R(\lambda)$, with $R(\lambda)$ being defined as the intensity spectrum of the radiation reflected on the coated substrate $S3(\lambda)$ divided by the intensity spectrum of the incident radiation $SO(\lambda)$ of the light source in the operational range of the spectrometer, has at least one detectable peak, the thickness (e) of the oxide layer is calculated by the following formula:

$$e \ = \ k.\lambda_e/4n,$$

   where k is the appearance order of the peaks in the case of a progressive increase in the oxide layer (k=1 : 1st minimum, k=2 : 1st maximum, k=3 : 2nd minimum, etc.), $\lambda_e$ is the wavelength of the peak considered and n is the refraction index, the calculation of the DIAT parameter obtained from the measurements of the absolute apparent temperatures ($T_{Aa1}$, $T_{Aa2}$) at both said selected wavelengths ($\lambda_1$, $\lambda_2$) being used as required for the unambiguous determination of the appearance order of the peaks and thus of the k value assigned to each of the peaks.

5. Method according to Claim 4, **characterised in that**, when there are several extremes, the thickness (e) is the result of the calculation of the arithmetic mean of the thicknesses obtained by the above-mentioned expression.

6. Method according to any one of Claims 2 to 5, **characterised in that** the lower wavelength ($\lambda_1$) is selected as short as possible as long as the signal/noise ratio is greater than or equal to 1.

7.  Method according to Claim 6, **characterised in that** the lower wavelength ($\lambda_1$) is greater than or equal to 700nm.

8.  Method according to any one of Claims 2 to 7, **characterised in that** the upper wavelength ($\lambda_2$) is selected either as high as possible within the spectral range of the spectrometer or at a value higher than the upper limit of the spectral range of the spectrometer, the measurement being taken in this last case by means of the additional pyrometer or detector (8) which is external to the spectrometer and aiming at a zone essentially close to that aimed at by the latter.

9.  Method according to Claim 8, **characterised in that** the upper wavelength ($\lambda_2$) is higher than or equal to at least 5 times, and preferably 15 times, the maximum thickness to be measured.

10. Method according to Claim 2, **characterised in that**, when determining a very thin layer, i.e. with a thickness < e1, the lower wavelength ($\lambda_1$) is selected as short as possible whilst ensuring a signal/noise ratio greater than or equal to 1, the upper wavelength ($\lambda_2$) being selected so as to ensure an unambiguous relationship between the DIAT parameter and the thickness below the value e1.

11. Method according to Claim 2, **characterised in that**, when determining a very thick layer, i.e. with a thickness > e2, the upper wavelength ($\lambda_2$) being selected greater than or equal to at least 5 times, and preferably 15 times, the maximum thickness to be measured, the lower wavelength ($\lambda_1$) being then selected to ensure an unambiguous relationship between the DIAT parameter and the thickness in the range extending from at least e2 to the maximum thickness to be measured.

12. Method according to Claim 1, **characterised in that**, when the intrinsic radiation S1($\lambda$) of the coated substrate is detectable and this time exceeds in intensity the value of the reflected signal S3 ($\lambda$) multiplied by a K factor (K>0), experimentally determined over at least one section of the spectral range of the spectrometer, the thickness (e) of the oxide layer is determined from the DIAT parameter, the lower wavelength ($\lambda_1$) being as short as possible within the spectral range of the spectrometer, whilst ensuring a signal/noise ratio greater than or equal to 1, and the upper wavelength ($\lambda_2$) being selected greater than or equal to at least 5 times, and preferably 15 times, the maximum value of the thickness to be measured.

13. Method according to Claim 12, **characterised in that** the DIAT parameter is measured at two different pairs of wavelengths ($\lambda_1$, $\lambda_2$) and ($\lambda_3$, $\lambda_4$), preferably selecting $\lambda_3 \leq \lambda_1$, $\lambda_4 > \lambda_1$ and $\lambda_4 \leq \lambda_3 + 300$ nm.

14. Method according to any one of Claims 2 to 13, **characterised in that** the thickness of the oxide layer determined from the DIAT parameter is directly obtained by relating the value of said parameter to a theoretical simulation curve or even to an experimental calibration curve obtained in advance, showing the evolution in said parameter with the coating thickness.

15. Method according to any one of the preceding claims, **characterised in that** the metal substrate is a steel strip in motion undergoing controlled oxidation, preferably in an oven, and then a reduction of the oxide layer formed.

16. Installation for implementing the method according to any one of the preceding claims, **characterised in that** it comprises a light source (1) with an essentially continuous spectrum which may, by means of a lens (2), form a small luminous spot at the surface of the coated substrate (3a, 3b), a shutter (4) positioned between the light source and the substrate, a second lens (5) forming the image of the surface of said spot on the inlet slot (6) of an optical spectrometer (7) which is sensitive in a wavelength range within the spectrum of the light source, and an additional pyrometer or detector (8) external to the spectrometer (7), towards which may be directed the intrinsic radiation of the substrate that is coated and sensitive to at least one wavelength outside the wavelength range of the spectrometer (7).

17. Installation according to Claim 16, **characterised in that** the external pyrometer (8) is a pyrometer with a narrow spectrum that is sensitive to a wavelength greater than or equal to 5 times, and preferably 15 times, the maximum thickness of the layer to be measured.

18. Installation according to Claim 17, **characterised in that** it comprises a means (9, 10) for separating the radiation in the spectral range of the optical spectrometer (7) from that in the spectral range of the additional pyrometer or detector (8).

19. Installation according to Claim 18, **characterised in that** said means comprises at least one dichroic mirror (9) and a lens (10).

20. Installation according to Claim 18, **characterised in that** it comprises a means allowing to alternately send the intrinsic radiation from the coated substrate towards the optical spectrometer (7) and towards the additional pyrometer or detector (8), such as an optical modulator or a movable mirror.

21. Installation according to any one of Claims 16 to 20, **characterised in that** it is designed so that a single lens may be used both for the illumination and for the measurement and is placed along an axis more or less orthogonal to the surface of the substrate.

22. Installation according to any one of Claims 16 to 21, **characterised in that** the operational wavelength range of the spectrometer is within an interval of 200 to 2,500nm.

23. Installation according to any one of Claims 16 to 22, **characterised in that** the spectrometer may be used as a device for measuring the spectral reflection factor within the above-mentioned wavelength range.

24. Installation according to any one of Claims 16 to 23, **characterised in that** it may be positioned at at least 1 metre from the surface of the substrate.

**Patentansprüche**

1. Verfahren für die kontaktlose Messung in Echtzeit der Dicke (e) einer auf einem metallischen Trägermaterial aufgetragenen Oxydschicht, vorzugsweise auf einem sich bewegenden Stahlband, das für eine spätere Galvanisierungsbehandlung mit Warmhärten vorgesehen ist; dieses Verfahren verwendet eine Anlage, die eine Lichtquelle (1) umfasst, die ein im Wesentlichen kontinuierliches Spektrum abgibt und mithilfe eines ersten optischen Hilfsmittels (2), vorzugsweise einer Linse, einen Lichtpunkt auf der Oberfläche (3) des Trägermaterials erzeugt. Ferner umfasst sie einen Verschluss (4), der zwischen der Lichtquelle und dem Trägermaterial angeordnet wird, ein zweites optisches Hilfsmittel (5), vorzugsweise eine Linse, die die Abbildung der Oberfläche des besagten Lichtpunktes auf dem Eingangsschlitz (6) eines optischen Spektrometers (7) erzeugt, das wiederum für die Bandbreite der Wellenlängen innerhalb des Spektrums der Lichtquelle empfänglich ist. Ferner umfasst die Vorrichtung ein Pyrometer bzw. ein zusätzliches Erkennungsgerät (8) außerhalb des Spektrometers (7), zu dem die eigentliche Strahlung des beschichteten Trägermaterials geleitet wird und das eine Empfindlichkeit gegenüber mindestens einer Wellenlänge aufweist, die sich außerhalb der spektralen Bandbreite des Spektrometers befindet. Das Verfahren ist **dadurch gekennzeichnet, dass** die Dicke (e) der besagten Oxydschicht ausgehend von der Messung der absoluten offensichtlichen Temperaturen des beschichteten Trägermaterials für mindestens zwei Wellenlängen bestimmt wird; die besagten Messungen werden mithilfe des Spektrometers 7 durchgeführt, das im Pyrometer-Modus arbeitet bzw. mithilfe eines Pyrometers oder eines zusätzlichen Erkennungsgerätes (8) für den Fall, in dem die eigentliche Strahlung $S1(\lambda)$ des beschichteten Trägermaterials erkennbar ist, ohne K Mal (K>0) den Wert des reflektierten Signals $S3(\lambda)$ auf der gesamten spektralen Bandbreite des Spektrometers (7) zu überschreiten, mit:

   - $S1(\lambda)$ ist das Spektrum der dem beschichteten Trägermaterial eigenen Strahlungsintensität; dies wird in einem ersten Schritt durch das besagte Spektrometer (7) gemessen, das in diesem Fall im Pyrometer-Modus arbeitet, indem der Verschluss (4) im Optikweg geschlossen wird
   - $S2(\lambda)$ ist das Intensitätsspektrum des beschichteten Trägermaterials, das in einem zweiten Schritt mithilfe des besagten Spektrometers (7) gemessen wird; dieses arbeitet in diesem Fall im Pyrometer- und Reflexionsmodus, wobei der besagte Verschluss (4) in der offenen Position verbleibt.
   - $S3(\lambda)$ ergibt sich, indem das Spektrum $S1(\lambda)$ vom Spektrum $S2(\lambda)$ abgezogen wird.

2. Verfahren gemäß dem Anspruch 1, **dadurch gekennzeichnet, dass** man die Dicke (e) der Oxydschicht, wenn kein Spitze im zuvor genannten Spektralintervall erkennbar ist, bestimmt, indem man ableitet, dass die Schicht entweder zu dünn ist, d.h. über eine Dicke von <e1 verfügt oder zu dick ist, somit über eine Dicke von >e2 verfügt, um Interferenzspitzen zu erhalten, die im betreffenden Spektralintervall erscheinen; die Dämpfung der Beleuchtung in der Schicht ist so, wenn diese Schicht zu dick ist, dass keine Interferenz von Bedeutung erzeugt wird. In diesem Fall wird mit der Unterscheidung zwischen den beiden Fällen fortgefahren, indem sich auf die Messung der offensichtlichen absoluten Temperaturen (TAa1, TAa2) bei zwei Wellenlängen gestützt wird, die aus der spektralen Bandbreite des Spektrometers (7) und des Pyrometers bzw. zusätzlichen Erkennungsgerätes (8) in Form einer niedrigeren Wellenlänge ($\lambda$1) und einer höheren Wellenlänge ($\lambda_2$) gewählt wird und hiervon die Differenz der Kehrwerte besagter Temperaturen ($1/T_{Aa2} - 1/T_{Aa1}$) berechnet wird; der hierdurch sich ergebende Wert wird DITA-Parameter genannt und dieser Grenzwert mit einem zuvor festgelegten Grenzwert (L) verglichen. Dieser Vergleich ermöglicht es zu bestimmen, ob die Schicht sehr dick oder sehr dünn ist, d.h. sie wird als sehr dünn betrachtet, wenn der DITA-Wert oberhalb dem besagten Grenzwert (L) liegt und als sehr dick, wenn nicht.

3.  Verfahren gemäß dem Anspruch 2, **dadurch gekennzeichnet, dass** der Wert des besagten Grenzwerts (L) annäherungsweise gleich dem arithmetischen Mittel aus dem DITA-Wert für eine Schichtdicke nahe oder gleich 0 sowie einem DITA-Wert des zweiten Maximalwerts der DITA-Kurve in Abhängigkeit der Dicke ist.

4.  Verfahren gemäß dem Anspruch 1, **dadurch gekennzeichnet, dass**, wenn das Spektrum des Reflexionsfaktors R($\lambda$), und R($\lambda$) hierbei als das Intensitätsspektrum der durch das beschichtete Trägematerial S3($\lambda$) geteilt durch das Intensitätsspektrum der Anfangsstrahlung SO($\lambda$) der Lichtquelle definiert ist, in der betrieblichen Bandbreite des Spektrometers mindestens eine erkennbare Spitze aufweist, man die Dicke (e) der Oxydschicht gemäß der folgenden Formel berechnet:

$$e = k.\lambda_e/4n,$$

in der k die Erscheinungsreihenfolge, in der die Spitzen im Fall eines progressiven Wachstums der Oxydschicht auftreten, ist (k=1 : 1. Minimum; k = 2 : 1. Maximum; k = 3 : 2. Minimum, etc.); $\lambda_e$ entspricht der Wellenlänge der fraglichen Spitze, während n gleich dem Refraktionsindex ist. Hierbei wird die Berechnung des von den Messungen der offensichtlichen absoluten Temperaturen ($T_{Aa1}$, $T_{Aa2}$) erhaltenen DITA-Parameters ggf. für eine eindeutige Bestimmung der Größenordnung des Auftretens der Spitzen und somit des betreffenden k-Wertes für jede der Spitzen verwendet.

5.  Verfahren gemäß dem Anspruch 4, **dadurch gekennzeichnet, dass**, wenn mehrere Extremwerte vorliegen, die Dicke (e) das Ergebnis der Berechnung des arithmetischen Mittels der Werte für die Dicke ist, die durch den zuvor genannten Ausdruck ermittelt wurden.

6.  Verfahren gemäß einem der Ansprüche 2 bis 5, **dadurch gekennzeichnet, dass** die niedrigere Wellenlänge ($\lambda$1) so kurz wie möglich jedoch ausreichend gewählt wird, insofern dass das Verhältnis zwischen Signal/Störung größer oder gleich 1 ist.

7.  Verfahren gemäß dem Anspruch 6, **dadurch gekennzeichnet, dass** die niedrigere Wellenlänge ($\lambda$2) gleich oder größer 700 nm ist.

8.  Verfahren gemäß einem der Ansprüche 2 bis 7, **dadurch gekennzeichnet, dass** die größere Wellenlänge ($\lambda$2) entweder so hoch wie möglich in der spektralen Bandbreite des Spektrometers oder mit einem höheren Wert als dem der oberen Markierung der spektralen Bandbreite des Spektrometers gewählt wird; die Messung erfolgt im letzteren Fall mithilfe eines Pyrometers bzw. eines externen Erkennungsgerätes (8) zusätzlich zum Spektrometer und zielt auf einen Bereich, der sich im Wesentlichen in der Nähe des Bereichs befindet, auf den mit letzterer Messung abgezielt wird.

9.  Verfahren gemäß dem Anspruch 8, **dadurch gekennzeichnet, dass** die höhere Wellenlänge ($\lambda$2) größer oder gleich mindestens dem Fünffachen und vorzugsweise dem Fünfzehnfachen der maximal zu messenden Dicke ist.

10.  Verfahren gemäß dem Anspruch 2, **dadurch gekennzeichnet, dass** für den Fall einer Bestimmung einer sehr dünnen Schicht, d.h. einer Dicke von weniger als e1, die niedrigere Wellenlänge ($\lambda_1$) genau so kurz wie möglich gewählt und hierbei ein Verhältnis zwischen Signal/Störung größer oder gleich 1 sichergestellt wird; die höhere Wellenlänge ($\lambda_2$) wird dabei so gewählt, dass eine eindeutige Beziehung zwischen dem Parameter DITA und dem unter e1 liegenden Wert gewährleistet wird.

11.  Verfahren gemäß dem Anspruch 2, **dadurch gekennzeichnet, dass**, für den Fall der Bestimmung einer sehr dicken Schicht, d.h. einer Dicke von größer als e2, die höhere Wellenlänge ($\lambda$2) größer oder gleich einem mindestens Fünffachen und vorzugsweise einem Fünfzehnfachen der maximal zu messenden Dicke gewählt wird. Die niedrigere Wellenlänge (λ1) wird hierbei anschließend so gewählt, dass eine eindeutige Beziehung zwischen dem DITA-Parameter und der Dicke in einem Bereich gewählt wird, der sich von mindestens e2 bis zur maximal zu messenden Dicke erstreckt.

12. Verfahren gemäß dem Anspruch 1, **dadurch gekennzeichnet, dass** für den Fall, dass die eigentliche Strahlung S1(λ) des beschichteten Materials erkennbar ist und hierbei in der Stärke den Wert des reflektierten Signals S3(λ) multipliziert mit einem Faktor K (K>0) überschreitet, der in experimenteller Weise für mindestens einen Bereich der spektralen Bandbreite des Spektrometers ermittelt wird. Hierbei wird die Dicke (e) der Oxydschicht ausgehend vom DITA-Parameter ermittelt; die niedrigere Wellenlänge (λ1) wird hierbei genau so kurz wie möglich gewählt und ein Verhältnis zwischen Signal/Störung größer oder gleich 1 sichergestellt; die höhere Wellenlänge (λ2) wird größer oder gleich einem mindestens Fünffachen und vorzugsweise einem Fünfzehnfachen der maximal zu messenden Dicke gewählt.

13. Verfahren gemäß dem Anspruch 12, **dadurch gekennzeichnet, dass** der DITA-Parameter mit zwei Paaren unterschiedlicher Wellenlängen gemessen wird (λ1, λ2) sowie (λ3, λ4), vorzugsweise indem λ3≤λ1, λ4>λ1 und λ≤λ3 + 300 nm gewählt wird.

14. Verfahren gemäß einem der Ansprüche 2 bis 13, **dadurch gekennzeichnet, dass** die Dicke der ausgehend vom DITA-Parameter bestimmten Oxydschicht direkt erhalten wird, in dem der Wert des besagten Parameters auf einer Kurve für die theoretische Simulation oder auch auf einer Versuchskalibrierkurve, die zuvor erhalten wurde, angetragen wird, die jeweils die Entwicklung des besagten Parameters mit der Beschichtungsdicke zeigt.

15. Verfahren gemäß einem der vorherigen Ansprüche, **dadurch gekennzeichnet, dass** es sich bei dem metallischen Trägermaterial um ein sich bewegendes Stahlband handelt, dass einer kontrollierten Oxydierung ausgesetzt wird; vorzugsweise erfolgt diese Behandlung in einem befeuerten Ofen gefolgt von einer Reduzierung der gebildeten Oxydschicht.

16. Anlage für die Umsetzung des Verfahrens gemäß einem der vorherigen Ansprüche, **dadurch gekennzeichnet, dass** sie eine Lichtquelle (1) enthält, die ein im Wesentlichen kontinuierliches Spektrum vorweist und die mithilfe einer Linse (2) einen kleinen Lichtpunkt auf der Oberfläche des beschichteten Trägermaterials (3a, 3b) bilden kann. Die Anlage umfasst ferner einen zwischen der Lichtquelle und dem Trägermaterial angeordneten Verschluss (4) und eine zweite Linse (5), die das Abbild der Oberfläche des besagten Lichtpunkts auf dem Eingangsschlitz (d) eines optischen Spektrometers (7) darstellen kann; dieses Spektrometer ist im Hinblick auf die Bandbreite der Wellenlängen innerhalb des Spektrums der Lichtquelle empfindlich. Des Weiteren umfasst die Anlage ein Pyrometer bzw. eine zusätzliches Erkennungsgerät (8) außerhalb des Spektrometers (7), zu dem die eigentliche Strahlung des beschichteten Trägermaterials gelenkt werden kann und das im Hinblick auf mindestens eine Wellenlänge empfindlich ist, die sich außerhalb der Bandbreite der Wellenlänge des Spektrometers (7) befindet.

17. Anlage gemäß dem Anspruch 16, **dadurch gekennzeichnet, dass** es sich bei dem externen Pyrometer (8) um ein Pyrometer mit engem Spektrum handelt, das im Hinblick auf eine Wellenlänge größer oder gleich dem Fünffachen und vorzugsweise dem Fünfzehnfachen der maximalen Dicke der zu messenden Schicht entspricht.

18. Anlage gemäß dem Anspruch 17, **dadurch gekennzeichnet, dass** sie Mittel (9, 10) für die Trennung der Strahlung in der spektralen Bandbreite des optischen Spektrometers (7) von der in der spektralen Bandbreite des Pyrometers bzw. des zusätzlichen Erkennungsgerätes (8) enthält.

19. Anlage gemäß dem Anspruch 18, **dadurch gekennzeichnet, dass** die besagten Mittel mindestens einen dichroitischen Spiegel (9) und eine Linse (10) umfassen.

20. Anlage gemäß dem Anspruch 18, **dadurch gekennzeichnet, dass** sie Mittel enthält, wie z.B.einen optischen Modulator oder einen Spiegel, die es ermöglichen, wechselnd die eigentliche Strahlung des beschichteten Trägermaterials zum optischen Spektrometer (7) sowie zum Pyrometer bzw. zusätzlichen Erkennungsgerät (8) zu lenken.

21. Anlage gemäß einem der Ansprüche 16 bis 20, **dadurch gekennzeichnet, dass** sie so angepasst ist, dass eine einzige Linse gleichermaßen für die Beleuchtung als auch für die Messung verwendet werden kann und entlang einer Achse angeordnet wird, die sinnvollerweise orthogonal zur Oberfläche des Trägermaterials liegt.

**22.** Anlage gemäß einem der Ansprüche 16 bis 21, **dadurch gekennzeichnet, dass** die betriebliche Bandbreite der Wellenlängen des Spektrometers in dem Intervall zwischen 200 und 2500 nm liegt.

**23.** Anlage gemäß einem der Ansprüche 16 bis 22, **dadurch gekennzeichnet, dass** das Spektrometer sich als Messgerät für den Faktor der spektralen Reflexion in einer Bandbreite der vorgenannten Wellenlängen verwenden lässt.

**24.** Anlage gemäß einem der Ansprüche 16 bis 23, **dadurch gekennzeichnet, dass** sie über einen Abstand von mindestens 1 m zur Oberfläche des Trägermaterials verfügt.

Fig. 1

EP 1 653 192 B1

Fig. 2

EP 1 653 192 B1

DITA

λ1 = 800 nm; εp1 = 0,8
λ2 = 1000 nm; εp2 = 0,8

Epaisseur (nm)

Fig. 3

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- BE 20040220
- EP 0408015 A